(19) Europäisches Patentamt
European Patent Office
Office européen des brevets

(11) **EP 1 543 638 B1**

(12) **FASCICULE DE BREVET EUROPEEN**

(45) Date de publication et mention
de la délivrance du brevet:
**20.09.2006 Bulletin 2006/38**

(51) Int Cl.:
***H04B 11/00*** *(2006.01)*

(21) Numéro de dépôt: **02796770.2**

(22) Date de dépôt: **24.12.2002**

(86) Numéro de dépôt international:
**PCT/EP2002/014900**

(87) Numéro de publication internationale:
**WO 2004/023682 (18.03.2004 Gazette 2004/12)**

(54) **SYSTEME ET PROCEDE DE TRANSMISSION DE DONNEES PAR ONDES ACOUSTIQUES**

DATENÜBERTRAGUNGSSYSTEM UND VERFAHREN MIT SCHALLWELLEN

DATA TRANSMISSION SYSTEM AND METHOD USING SOUND WAVES

(84) Etats contractants désignés:
**AT BE BG CH CY CZ DE DK EE ES FI FR GB GR
IE IT LI LU MC NL PT SE SI SK TR**

(30) Priorité: **04.09.2002 EP 02078628**

(43) Date de publication de la demande:
**22.06.2005 Bulletin 2005/25**

(73) Titulaire: **ETA SA Manufacture Horlogère Suisse
2540 Grenchen (CH)**

(72) Inventeur: **BARRAS, David
CH-8952 Schlieren (CH)**

(74) Mandataire: **Thérond, Gérard Raymond et al
I C B
Ingénieurs Conseils en Brevets SA
Rue des Sors 7
2074 Marin (CH)**

(56) Documents cités:
**EP-A- 1 075 098          US-B1- 6 236 889**

• **PATENT ABSTRACTS OF JAPAN vol. 008, no. 008
(E-221), 13 janvier 1984 (1984-01-13) & JP 58
172026 A (CLARION KK), 8 octobre 1983
(1983-10-08)**

EP 1 543 638 B1

**Description**

La présente invention concerne de manière générale des systèmes et des procédés de transmission de données par ondes acoustiques.

Par « onde acoustique » on entendra, dans le cadre de la présente description, une onde élastique produisant un son audible ou inaudible selon sa longueur ou, en d'autres termes, une onde élastique dont la longueur dans le milieu de propagation considéré correspond à une fréquence infrasonore, sonore, voire ultrasonore.

Des systèmes employant des ondes acoustiques pour la transmission de données sont déjà connus. Les documents US 4,242,745 et US 6 236 889 décrivent par exemple une pièce d'horlogerie munie d'un transducteur électroacoustique pour recevoir des données transmises par modulation d'une onde porteuse acoustique générée par un dispositif d'émission externe.

Le document US 4,320,387 décrit un dispositif portable ainsi qu'un procédé de communication de données par ondes acoustiques. Dans ce document, il est notamment proposé de transmettre des données par ultrasons au moyen d'un transducteur électroacoustique. Il est en particulier proposé de transmettre les données par une technique de modulation en fréquence de l'onde porteuse acoustique (technique connue sous la dénomination « Frequency Shift Keying » ou FSK).

Les documents US 5,719,825 et US 5,848,027 décrivent tous deux un système pour l'enregistrement et le traitement de données personnelles d'un utilisateur (par exemple l'activité physique d'un athlète) comportant notamment un terminai informatique et une pièce d'horlogerie électronique susceptibles de communiquer par ondes acoustiques. Plus particulièrement, la pièce d'horlogerie est munie d'un transducteur électroacoustique (un élément piézoélectrique) pour transmettre les données personnelles de l'utilisateur vers le terminal informatique, ce dernier étant lui-même pourvu d'un microphone pour la réception des ondes acoustiques générées par la pièce d'horlogerie.

Le document EP 1 075 098, au nom du présent Déposant, décrit quant à lui un circuit convertisseur d'un signal acoustique ainsi qu'un procédé de communication bidirectionnelle par ondes acoustiques pour l'échange de données entre deux pièces d'horlogerie ou entre un terminal informatique et une pièce d'horlogerie.

Enfin, le document WO 2001/10064, également au nom du présent Déposant, décrit un système de communication acoustique entre une unité portative et un terminal de communication.

Dans les deux derniers documents susmentionnés, il est notamment proposé d'utiliser l'installation audio existante (haut-parleurs et carte son) d'un terminal informatique pour transmettre les données désirées vers une unité portative au moyen d'ondes acoustiques. Un avantage de cette solution réside dans le fait qu'il n'est nullement nécessaire de pourvoir le terminal informatique d'un quelconque dispositif dédié uniquement aux opérations d'émission et/ou de réception des données.

La solution typique envisagée jusqu'à maintenant pour transmettre des données par voie acoustique, notamment du terminal informatique vers l'unité portative, consiste à générer une onde porteuse acoustique à une fréquence déterminée et à moduler cette onde porteuse acoustique en fonction des données à transmettre. La modulation de l'onde porteuse acoustique en fonction des données peut par exemple consister à moduler l'onde porteuse acoustique en amplitude, en fréquence ou en phase selon des techniques de modulations connues.

On a toutefois pu constater que les haut-parleurs dont sont typiquement équipés les terminaux informatiques du commerce sont des dispositifs fabriqués à faibles coûts et dont les caractéristiques en termes de réponse en fréquence sont très irrégulières. Des mesures effectuées sur un échantillon de haut-parleurs disponibles dans le commerce ont montré de fortes variations d'amplitude du signal en fonction de la fréquence (souvent au delà de $\pm 10$ dB). En fait, la plupart des systèmes de haut-parleur usuellement proposés pour équiper des ordinateurs personnels ne sont pas destinés à permettre la restitution haute-fidélité de sons, et leur courbe de réponse est donc très accidentée. Cette courbe de réponse accidentée est essentiellement due au fait que l'impédance acoustique de l'enceinte varie rapidement avec la fréquence et présente des extrema très marqués aux fréquences propres, d'où des pics et des creux dans la courbe de réponse du système. On a également pu noter que ce problème de distorsion d'amplitude s'aggrave lorsque la distance entre le haut-parleur et l'unité portative est courte.

Un inconvénient lié à l'utilisation de systèmes haut-parleurs existants réside donc dans le fait qu'il n'est pas possible d'assurer une haute fiabilité de transmission des données par ondes acoustiques, la fréquence de l'onde porteuse acoustique pouvant éventuellement coïncider avec un pic ou un creux dans la réponse en fréquence du haut-parleur utilisé, et ce quelque soit la technique de modulation utilisée pour transmettre les données.

Une solution permettant d'augmenter la fiabilité de transmission d'un tel système de transmission de données par ondes acoustiques doit donc être recherchée. Le but de la présente invention est de proposer une telle solution.

A cet effet, la présente invention propose un procédé de transmission de données par ondes acoustiques entre un dispositif d'émission et un dispositif de réception dont les caractéristiques sont énoncées dans la revendication 1.

La présente invention a également pour objet un système de transmission de données par ondes acoustiques pour la mise en oeuvre de ce procédé de transmission et dont les caractéristiques sont énoncées dans la revendication 9.

Des modes de réalisation avantageux de la présente invention font l'objet des revendications dépendantes.

Selon l'invention, la fréquence de l'onde porteuse acoustique est ainsi variée, durant une période de temps déterminée, pour balayer une gamme de fréquences déterminée située dans la bande-passante commune aux premier et second transducteurs électroacoustiques équipant respectivement les dispositifs d'émission et de réception. De la sorte, on assure que la fréquence de l'onde porteuse acoustique transmise ne coïncide pas en tout temps avec un pic ou un creux de la caractéristique de réponse en fréquence du premier ou du second transducteur électroacoustique.

La transmission des données est assurée par une modulation adéquate de l'onde porteuse acoustique (en particulier une modulation en amplitude) à laquelle s'ajoute une modulation en fréquence de l'onde porteuse acoustique qui a pour but essentiel d'élargir le spectre de fréquence d'émission du signal acoustique dans la bande-passante du dispositif d'émission et/ou de réception. En variant de la sorte la fréquence de l'onde porteuse acoustique, on assure que la fréquence du signal transmis ne coïncide pas en tout temps avec un pic ou un creux dans la réponse en fréquence du système acoustique utilisé. Selon l'invention, on comprendra ainsi que deux modulations de l'onde porteuse acoustique sont superposées, l'une pour transmettre les données et l'autre, en l'occurrence une variation ou une modulation en fréquence de l'onde porteuse acoustique, pour assurer une diversité spectrale suffisante de l'onde porteuse acoustique.

Selon un mode de réalisation particulièrement avantageux de la présente invention, qui a montré une efficacité particulière, la fréquence de l'onde porteuse acoustique générée par le transducteur acoustique du dispositif d'émission est variée selon une technique de modulation de fréquence à un ou plusieurs signaux modulants. On a pu constater que l'utilisation de cette solution conduisait à une fiabilité très élevée de transmission des données.

Selon un mode de réalisation du système de transmission de données, il est également prévu de mémoriser l'onde porteuse acoustique sous la forme d'une succession d'échantillons stockés dans une table. La génération de l'onde porteuse acoustique modulée est de la sorte grandement simplifiée en ce sens qu'il suffit de consulter la table et générer l'onde porteuse acoustique sur la base de la succession d'échantillons mémorisés. Il n'est donc pas nécessaire de pourvoir le système d'émission de moyens électroniques dédiés. Il suffit en effet de prévoir une simple application informatique (ou « plug-in ») pour mettre en oeuvre l'invention sur un terminal informatique.

On comprendra de manière générale que l'on peut recourir à deux méthodes pour la génération de l'onde porteuse acoustique : une génération directe selon laquelle on génère l'onde porteuse acoustique à l'aide d'une fonction mathématique implémentée lors de l'émission des données, ou une génération indirecte selon laquelle une « table d'onde » pré-définie est enregistrée et simplement lue lors de la restitution de l'onde porteuse acoustique.

On notera encore qu'un avantage de la présente invention réside dans le fait que la mise en oeuvre de l'invention ne nécessite aucune modification de l'unité réceptrice, celle-ci opérant d'une manière parfaitement analogue à ce qui était le cas précédemment. La mise en oeuvre de l'invention est donc particulièrement simple et peu coûteuse.

D'autres caractéristiques et avantages de la présente invention apparaîtront plus clairement à la lecture de la description détaillée qui suit de divers modes de réalisation de l'invention donnés uniquement à titre d'exemple non limitatif et illustrés par les dessins annexés où :

- la figure 1 est une illustration schématique d'un système de communication de données par ondes acoustiques entre un terminal informatique et une unité portative, telle une montre ;
- la figure 2 est un diagramme temporel d'une onde porteuse acoustique générée selon un premier mode de mise en oeuvre de l'invention où la fréquence de l'onde porteuse acoustique est variée sensiblement linéairement sur une gamme de fréquences déterminée ;
- la figure 3 est un diagramme temporel d'une onde porteuse acoustique générée selon un autre mode de mise en oeuvre de l'invention où la fréquence de l'onde porteuse acoustique est variée selon une technique de modulation en fréquence à deux signaux modulants ;
- la figure 4 est une illustration schématique du spectre de fréquence résultant de l'émission continue de l'onde porteuse acoustique selon le mode de mise en oeuvre de la figure 3 ;
- la figure 5 est une illustration schématique de la transmission d'une séquence de bits déterminée par modulation en amplitude de l'onde porteuse acoustique modulée en fréquence selon le mode de mise en oeuvre de la figure 3 ; et
- la figure 6 est une illustration schématique d'une succession d'échantillons définissant l'onde porteuse acoustique de la figure 3 sur la durée d'émission d'un bit.

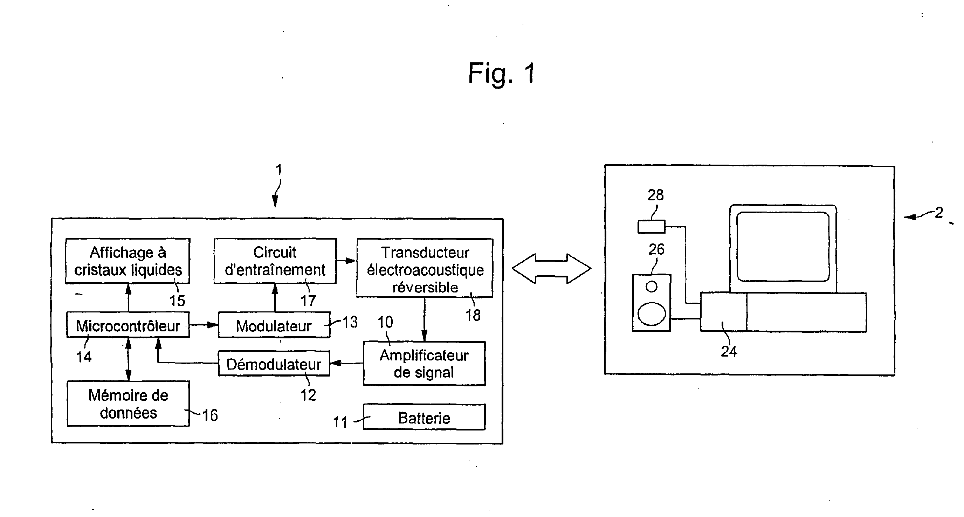

La figure 1 illustre sous forme schématique un système de communication de données par ondes acoustique entre un terminal informatique et une unité portative, désignés globalement par les références numériques 2 et 1 respectivement. L'unité portative 1 peut par exemple et avantageusement se présenter sous la forme d'une montre-bracelet pouvant être portée au poignet d'un utilisateur.

Le terminal informatique 2 peut être un ordinateur personnel, ou PC, du commerce comprenant des moyens d'émission de signaux acoustiques portant de l'information. Dans l'exemple schématique représenté à la figure 1, ces moyens se présentent typiquement sous la forme d'une carte son 24 disposée à l'intérieur de l'ordinateur personnel, d'un ou plusieurs haut-parleurs 26 et d'un microphone 28.

On rappellera qu'un avantage du système illustré dans la figure 1 réside dans le fait qu'il n'est pas nécessaire de modifier la structure du terminal informatique ou de lui adjoindre des éléments d'émission propres au type de liaison sans fil utilisée. Il suffit, pour pouvoir mettre en oeuvre l'invention, d'introduire dans l'ordinateur un programme lui permettant de moduler le signal acoustique de façon à ce que ce signal puisse ensuite être convenablement décodé par l'unité portative 1.

Lorsque le terminal informatique 2 émet un signal acoustique portant une information au moyen de son ou ses haut-parleurs 26, ce signal est aussitôt capté par les moyens de réception de l'unité portative 1. Ces moyens de réception sont formés par un transducteur électroacoustique réversible 18 qui joue le rôle à la fois d'un microphone (ou récepteur acoustique) et d'un haut-parleur (ou émetteur acoustique). En mode de réception, ce transducteur électroacoustique 18 transforme le signal acoustique incident en un signal électrique qui est ensuite converti, par des moyens de conversion de l'unité portative 1, en données destinées à être traitées par des moyens de traitement de cette unité afin d'en extraire l'information utile portée par le signal acoustique. Dans l'exemple représenté à la figure 1, les moyens de conversion de l'unité portative 1 comprennent un amplificateur 10 du signal électrique produit par le transducteur électroacoustique 18 et un circuit de démodulation (ou démodulateur) 12 relié à l'amplificateur de signal et destiné à démoduler le signal reçu et à transmettre le signal ainsi démodulé sur une entrée d'un microcontrôleur 14 constituant les moyens de traitement de l'unité portative. L'information portée par le signal acoustique émis par le terminal informatique 2, démodulée par le démodulateur 12 et traitée par le microcontrôleur 14, peut être stockée dans une mémoire 16 de l'unité portative 1 et/ou affichée sur un dispositif d'affichage 15 par exemple à cristaux liquides. Une batterie 11, éventuellement rechargeable; alimente l'unité portative 1 en énergie électrique.

Dans l'optique d'émettre des données par voie acoustique au moyen de l'unité portative, cette dernière est en outre équipée de moyens de conversion et d'émission pour convertir des données fournies par les moyens de traitement de l'unité portative en un signal acoustique modulé et émettre ce signal. Comme représenté à la figure 1, ces moyens de conversion comprennent un circuit de modulation (ou modulateur) 13 qui attaque, via un circuit d'entraînement 17, les moyens d'émission, à savoir le transducteur électroacoustique 18. Les moyens de traitement de l'unité portative 1, c'est-à-dire le microcontrôleur 14, effectuent la commande du circuit de modulation 13 en fonction des données à transmettre typiquement stockées dans la mémoire 16 de l'unité portative 1.

On notera encore que le microcontrôleur 14 de la figure 1 comporte typiquement des moyens d'encodage et de décodage (respectivement en amont et en aval du modulateur 13 et du démodulateur 12. Par ailleurs, le modulateur 13 et/ou le démodulateur 12 peuvent en pratique faire partie intégrante des fonctions du microcontrôleur 14.

On ne décrira pas ici la structure détaillée du transducteur électroacoustique et des moyens de traitement et de conversion associés. On pourra par exemple se référer aux documents EP 1 075 098 et WO 2001/10064 cités en préambule.

Dans ces documents, il est notamment proposé de modifier un circuit générateur de sons, utilisé classiquement pour générer des alarmes, en un circuit de conversion réversible susceptible de convertir un signal acoustique modulé en un signal électrique et inversement.

Il convient de noter que le système de communication illustré dans la figure 1 est agencé pour assurer une communication bidirectionnelle entre le terminal informatique et l'unité portative, le ou les haut-parleurs 26 étant utilisés pour transmettre de.données de l'ordinateur personnel 2 vers l'unité portative 1, le microphone 28 étant quant à lui utilisé pour recevoir des données transmises par l'unité portative 1. Dans la suite de la description, on s'intéressera plus particulièrement au transfert de données du terminal informatique 2 vers l'unité portative 1.

Comme mentionné en préambule, un inconvénient des solutions antérieures réside dans le fait que la fréquence de l'onde porteuse acoustique utilisée pour transmettre les données peut coïncider avec un creux ou un pic de la réponse en fréquence du haut-parleur utilisé. Ce problème se pose quelque soit le type de modulation utilisé pour coder l'information. Dans le cas d'une modulation d'amplitude, l'information est codée au moyen d'une variation de l'amplitude de l'onde porteuse acoustique, cette dernière étant transmise à une fréquence déterminée qui peut donc coïncider avec une irrégularité dans la réponse en fréquence du haut-parleur. Il en va de même avec la modulation de phase où l'information est codée par une variation de la phase du signal. Enfin, dans le cas d'une modulation en fréquence où l'information est codée par une variation de la fréquence de l'onde porteuse acoustique, la fréquence de l'onde porteuse acoustique modulée peut au moins partiellement coïncider avec une irrégularité dans la réponse en fréquence du haut-parleur, et une partie des données être en conséquence perdue.

Selon l'invention, on choisit toutefois d'introduire une forte diversité spectrale dans l'onde porteuse acoustique en faisant varier la fréquence de cette onde porteuse dans une gamme de fréquences déterminées dans la bande-passante commune au transducteur électroacoustique du haut-parleur et au transducteur électroacoustique de l'unité portative. Les données à transmettre sont transmises par une modulation adéquate de l'onde porteuse acoustique elle-même modulée en fréquence. Le choix de la modulation utilisée pour transmettre les données est dicté par la condition selon laquelle les deux modulations (la modulation utilisée pour transmettre les données et la modulation en fréquence adoptée pour assurer une diversité spectrale suffisante de l'onde porteuse acoustique) ne doivent pas ou peu interférer.

La solution la plus simple est de faire appel à une technique de modulation en amplitude de l'onde porteuse acoustique pour transmettre les données en sus de la modulation en fréquence de cette onde porteuse acoustique. Dans ce cas, on notera qu'il convient cependant de choisir des paramètres de modulation en fréquence assurant, d'une part, comme déjà mentionné, une diversité spectrale suffisante de l'onde porteuse acoustique, et, d'autre part, que l'enveloppe du signal acoustique soit affectée au minimum.

Une alternative à la modulation d'amplitude pourrait être une modulation de fréquence. On notera dans ce cas que le décodage de l'information devient plus complexe car la modulation de fréquence utilisée pour transmettre les données se superpose à la modulation de fréquence utilisée pour étaler le spectre de fréquence dans la bande passante utile. Dans ce cas, un démodulateur de type I/Q (avec signaux en quadrature de phase) permettrait de discriminer la phase ou la fréquence de l'onde porteuse.

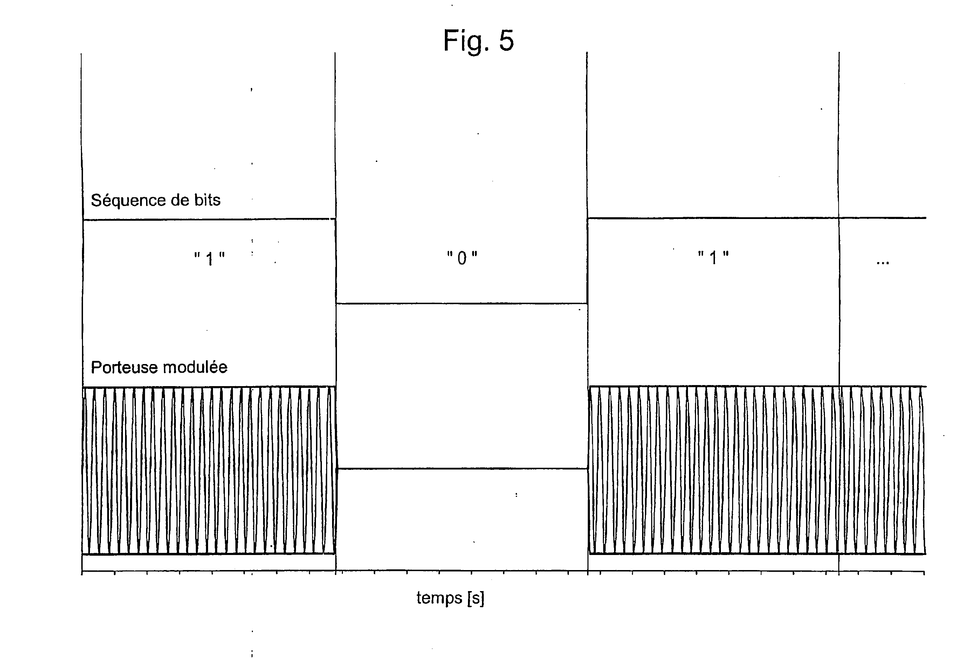

Dans la suite de la description, on admettra par simplification que les données sont transmises par modulation de l'amplitude de l'onde porteuse acoustique. Plus spécifiquement, on partira du principe que l'onde porteuse acoustique a un niveau d'amplitude déterminé non nul sur la durée d'émission d'un bit lorsque la valeur de ce bit équivaut à un premier niveau logique (par exemple « 1 »), et a un niveau d'amplitude nul sur la durée d'émission d'un bit lorsque la valeur de ce bit équivaut au second niveau logique (par exemple « 0 »). On peut par exemple se référer à la figure 5 qui montre un diagramme d'émission d'une séquence de bits adoptant la technique susmentionnée.

On notera qu'il s'agit ici d'un mode de modulation en amplitude spécifique et que d'autre modes de modulation en amplitude peuvent parfaitement être envisagés, par exemple un mode de modulation où un bit à « 1 » est transmis sous la forme d'une succession de deux demi-périodes où l'amplitude de l'onde porteuse acoustique est tout d'abord non-nulle puis nulle et où un bit à « 0 » est transmis sous la forme d'une succession de deux demi-périodes où l'amplitude de l'onde porteuse acoustique est, à l'inverse, nulle puis non-nulle (on parle communément de modulation ou encodage Manchester dans ce cas).

La solution pour assurer une grande diversité spectrale du signal acoustique dans une gamme de fréquences déterminée consiste à varier la fréquence de l'onde porteuse acoustique dans la bande-passante utile, c'est-à-dire la bande-passante commune au transducteur électroacoustique équipant le haut-parleur et au transducteur électroacoustique équipant l'unité portative. A titre d'exemple purement illustratif et non limitatif, on a pu définir que la bande-passante utile du système correspondait à une gamme de fréquences allant approximativement de 2'700 Hz à 4'000 - 4'500 Hz (soit une bande-passante de l'ordre de 1.5 kHz), cette bande-passante étant essentiellement déterminée par les caractéristiques du transducteur électroacoustique employé dans l'unité portative et par la construction de cette unité portative.

Une première solution envisageable consiste à varier la fréquence de manière sensiblement linéaire dans la bande utile. Dans ce cas, l'onde porteuse acoustique peut être exprimée sous la forme analytique suivante :

$$\text{CARRIER}(t) = \sin(2\pi \cdot (f0 + \Delta f \cdot (t/Tbit)) \cdot t + \text{alpha}) \qquad (1)$$

où f0 est la fréquence à laquelle doit débuter le balayage en fréquence, $\Delta f$ correspond à la moitié de la bande de fréquence sur laquelle le balayage doit être effectué, Tbit est la durée d'émission d'un bit, et alpha est un déphasage adéquat permettant d'assurer la continuité de l'onde porteuse acoustique d'un bit à un autre (ce déphasage peut être négligé le cas échéant). Ce déphasage alpha peut être exprimé de la manière suivante :

$$\text{alpha} = (2\pi \cdot (f0 + \Delta f) \cdot Tbit) \cdot (N - 1) \qquad (2)$$

où N correspond au N$^{\text{ème}}$ bit considéré.

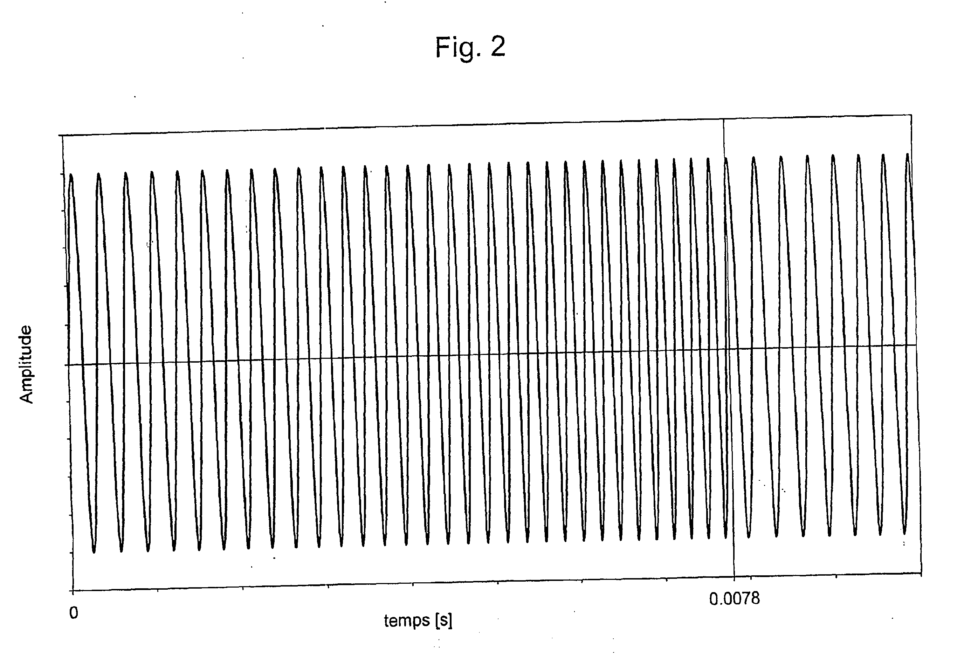

Une représentation de l'onde porteuse acoustique selon l'expression (1) ci-dessus est présentée à la figure 2. Dans cette figure, on a choisi arbitrairement une période d'émission de bit équivalant à environ 7,8 ms (exactement 7,8125 ms = 1/128) et des paramètres f0 et $\Delta f$ valant respectivement 3'000 et 1'000 Hz. Dans cette représentation, on notera que la phase alpha du signal est également ajustée d'un bit au suivant.

Une analyse spectrale de l'onde porteuse acoustique générée selon le principe ci-dessus montre que la gamme de fréquences sur laquelle l'onde porteuse acoustique est générée s'étend essentiellement de la fréquence f0 sélectionnée sur une largeur de bande équivalant à 2·$\Delta f$. Dans l'exemple numérique mentionné ci-dessus où f0 et $\Delta f$ valent respectivement 3'000 et 1'000 Hz, le spectre de l'onde porteuse acoustique générée s'étend ainsi essentiellement dans une bande de fréquences comprise entre 3'000 et 5'000 Hz.

Une solution alternative à la solution consistant à varier linéairement la fréquence de l'onde porteuse acoustique sur une gamme de fréquence déterminée consiste à varier la fréquence de l'onde porteuse acoustique selon une technique de modulation en fréquence à un ou plusieurs signaux modulants. Dans le cas d'une modulation en fréquence à deux signaux modulants, l'onde porteuse acoustique peut être exprimée sous la forme analytique suivante :

$$CARRIER(t) = \sin(2\pi \cdot f0 \cdot t + \Delta 1/f1 \sin(2\pi \cdot f1 \cdot t) + \Delta 2/ f2 \sin(2\pi \cdot f2 \cdot t)) \quad (3)$$

où f0 est la fréquence centrale de l'onde porteuse acoustique, f1 et $\Delta 1$ sont respectivement la fréquence et la déviation maximale du premier signal modulant et f2 et $\Delta 2$ sont respectivement la fréquence et la déviation maximale du second signal modulant. Comme précédemment, en référence à l'expression (1), il est envisageable d'inclure en outre, dans la définition de l'onde porteuse acoustique susmentionnée, une valeur de déphasage ajustée pour assurer la continuité de l'onde porteuse acoustique d'un bit à un autre, ce paramètre n'étant toutefois pas nécessaire.

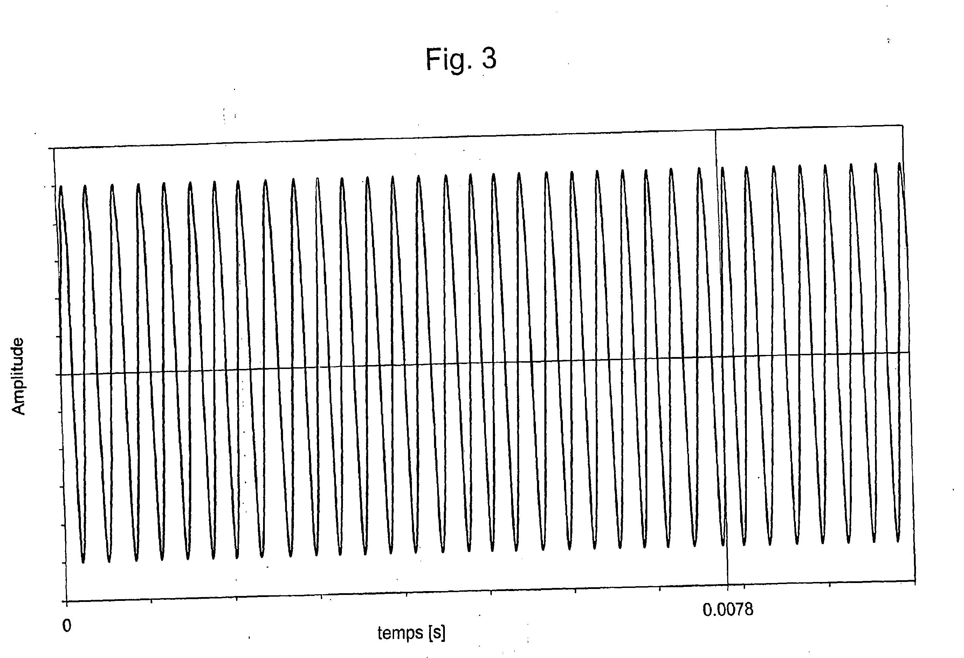

Une représentation de l'onde porteuse acoustique selon l'expression (3) ci-dessus est présentée à la figure 3. Dans cette figure, on a à nouveau choisi une période d'émission de bit Tbit équivalant à environ 7,8 ms. Les paramètres f0, f1, $\Delta 1$, f2 et $\Delta 2$ valant dans cet exemple respectivement 3'331, 1'000, 200, 600 et 120 Hz. On notera que le choix des paramètres f0, f1, $\Delta 1$, f2 et $\Delta 2$ est dicté par certaines contraintes. La fréquence centrale f0 est ainsi définit en fonction de la bande-passante utile du système et se situe sensiblement au milieu de cette bande-passante utile. Les paramètres de modulation f1, $\Delta 1$, f2 et $\Delta 2$ sont choisit, quant à eux, en fonction de la durée d'émission d'un bit Tbit et de la largeur de la bande-passante utile du système, la contrainte essentielle étant d'assurer une diversité spectrale suffisante de l'onde porteuse acoustique dans la bande-passante utile.

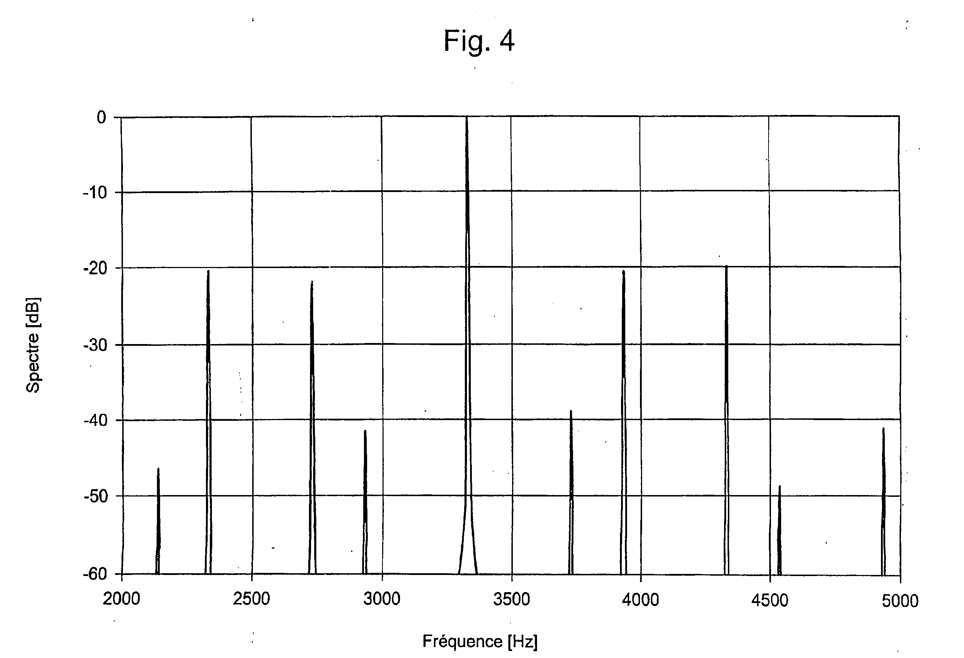

Le choix des paramètres f0, f1, f2, $\Delta 1$ et $\Delta 2$ permet de jouer sur la largeur de bande du spectre de fréquence de l'onde porteuse acoustique, ainsi que sur le nombre et la position des pics de fréquence de l'onde porteuse acoustique. A titre d'exemple illustratif, la figure 4 montre le spectre résultant d'une répétition continue de l'onde porteuse acoustique de la figure 3, où la période de répétition est de 7,8 ms. On peut notamment noter un pic de fréquence à la fréquence centrale de 3'331 Hz et des pics additionnels à 2'331 Hz, 2'731 Hz, 3'931 Hz et 4'331 Hz ainsi que d'autres pics de fréquence d'intensité plus faible.

D'un point de vue qualitatif, on a pu constater que la seconde solution susmentionnée où l'onde porteuse acoustique est modulée par un ou plusieurs signaux modulants donne de meilleurs résultats. Dans la mesure où les données sont transmises par modulation d'amplitude de l'onde porteuse acoustique, on notera que la modulation de la fréquence de l'onde porteuse acoustique qui est adoptée doit être telle que l'enveloppe de cette onde porteuse acoustique reste sensiblement constante (c'est-à-dire reste sensiblement non affectée) pour un niveau d'amplitude de modulation donné, ceci de manière à ne pas perturber, ou perturber au minimum, la transmission des données.

Dans l'optique d'une implémentation de l'invention sur un terminal informatique équipé d'un ou plusieurs haut-parleurs, il sera avantageux (notamment dans l'optique de limiter la charge de calcul pour le terminal informatique) de mémoriser l'onde porteuse acoustique sous la forme d'une succession d'échantillons prédéterminés. En particulier, il conviendra de mémoriser une succession d'échantillons représentatifs de l'onde porteuse acoustique sur la durée d'un bit, par exemple sous la forme d'une table stockée dans la mémoire du terminal informatique. Pour générer l'onde acoustique, il suffit alors de consulter cette table mémorisée pour générer la portion de l'onde porteuse acoustique correspondant à la durée d'émission d'un bit et de répéter cette opération pour chaque bit à transmettre. Cette onde porteuse acoustique est ensuite modulée en fonction des données à transmettre. Dans le cas particulier où les données sont transmises par modulation en amplitude selon le principe mentionné plus haut en référence à la figure 5, on comprendra que l'onde porteuse acoustique n'est à proprement parler générée que lorsqu'il est nécessaire de transmettre un bit à « 1 », l'amplitude dé l'onde porteuse acoustique étant nulle lors de la transmission d'un bit à « 0 ».

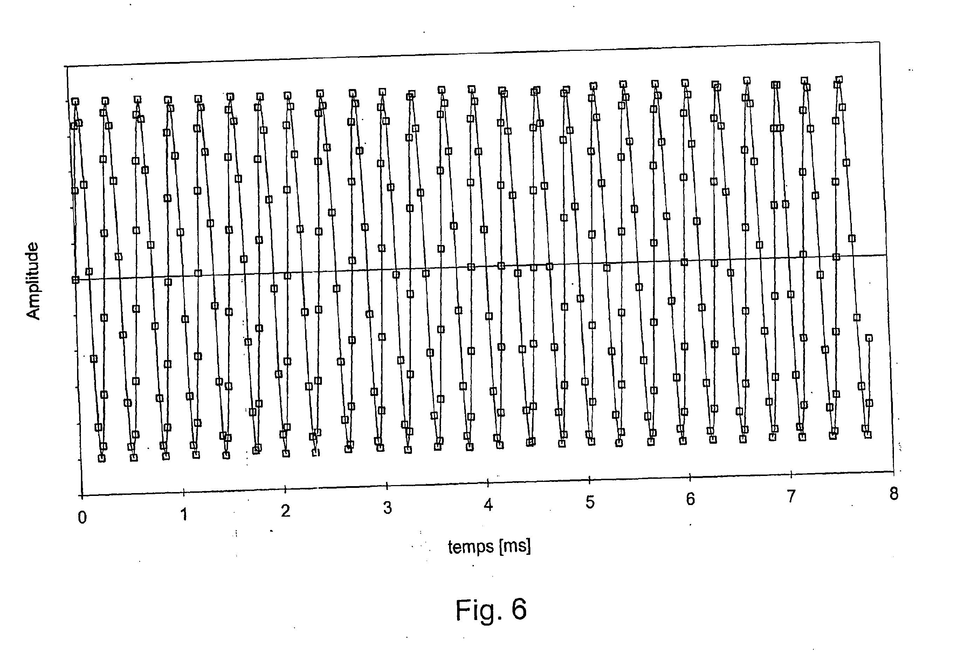

On notera qu'une fréquence d'échantillonnage typiquement adoptée pour l'échantillonnage de signaux audio sur ordinateurs personnels vaut 44'100 Hz. Pour une durée d'émission de bit Tbit d'environ 7,8 ms, prise ici à titre d'exemple, l'onde porteuse acoustique peut ainsi être représentée par un ensemble de 344 échantillons successifs. La figure 6 est une représentation, sur une durée d'émission d'un bit, de l'onde porteuse acoustique de la figure 3 échantillonnée à 44'100 Hz.

On comprendra de manière générale que diverses modifications et/ou améliorations évidentes pour l'homme du métier peuvent être apportées aux modes de réalisation décrits dans la présente description sans sortir du cadre de l'invention défini par les revendications annexées. En particulier, la présente invention n'est pas limitée aux deux modes de mise en oeuvre décrits ci-dessus, où la fréquence de l'onde porteuse acoustique est variée de manière sensiblement linéaire ou selon un technique de modulation de fréquence à plusieurs signaux modulants. Toute autre modulation adéquate permettant de faire varier la fréquence de l'onde porteuse acoustique pourrait être adoptée, pour autant que cette modulation permette d'assurer une diversité spectrale suffisante de l'onde porteuse acoustique dans la bande-passante désirée.

Enfin, la présente invention n'est pas limitée à la mise en oeuvre du procédé proposé dans un système comportant au moins un terminal informatique et une unité portative. Le procédé de transmission proposé s'applique dans tout système de transmission de données par ondes acoustiques où le transducteur électroacoustique équipant le dispositif d'émission présente une réponse en fréquence accidentée. De même, le même principe peut être adopté pour éviter que la fréquence de l'onde porteuse acoustique coïncide avec une irrégularité de la réponse en fréquence du transducteur électroacoustique utilisé dans le récepteur (par exemple le microphone du terminal informatique). Le procédé de transmission proposé pourrait ainsi être mis en oeuvre dans l'unité portative pour améliorer la fiabilité de transmission des données de l'unité portative vers le terminal informatique.

D'autre part, la configuration de l'unité portative illustrée dans la figure 1 fait appel à un transducteur électroacoustique réversible. On comprendra aisément que deux transducteurs électroacoustiques dédiés respectivement à l'émission et à la réception de données pourraient être utilisés. Enfin, la présente invention s'applique également dans le cas d'un système de transmission de données unidirectionnel.

**Revendications**

1.  Procédé de transmission de données par ondes acoustiques entre un dispositif d'émission (2) et un dispositif de réception (1), comprenant les étapes de :

    transmettre une onde porteuse acoustique à au moins une fréquence par un premier transducteur électroacoustique (26) dudit dispositif d'émission (2) et moduler ladite onde porteuse acoustique en fonction de données à transmettre par des moyens dudit dispositif d'émission (2),
    recevoir ladite onde porteuse acoustique modulée par le dispositif d'émission à l'aide d'un second transducteur électroacoustique (18) dudit dispositif de réception (1) et démoduler ladite onde porteuse acoustique et en extraire les données transmises, à l'aide de moyens dudit dispositif de réception (1),
    lesdits premier et second transducteurs électroacoustiques (26, 18) présentant chacun une bande-passante déterminée et une caractéristique de réponse en fréquence déterminée,

    **caractérisé en ce que** la fréquence de ladite onde porteuse acoustique est variée, durant une période de temps déterminée, pour balayer une gamme de fréquences déterminée située dans la bande-passante commune aux dits premier et second transducteurs électroacoustiques (26, 18), de sorte que la fréquence de l'onde porteuse acoustique transmise ne coïncide pas en tout temps avec un pic ou un creux de la caractéristique de réponse en fréquence dudit premier ou dudit second transducteur électroacoustique.

2.  Procédé selon la revendication 1, **caractérisé en ce que** lesdits moyens de modulation du dispositif d'émission sont des moyens de modulation en amplitude et **en ce que** la fréquence de ladite onde porteuse acoustique est variée de sorte que l'enveloppe de cette onde porteuse acoustique reste sensiblement constante pour un niveau d'amplitude de modulation donné.

3.  Procédé selon la revendication 1 ou 2, **caractérisé en ce que** la fréquence de ladite onde porteuse acoustique est variée sensiblement linéairement sur ladite gamme de fréquences déterminée.

4.  Procédé selon la revendication 1 ou 2, **caractérisé en ce que** la fréquence de ladite onde porteuse acoustique est variée selon une technique de modulation de fréquence à un ou plusieurs signaux modulants.

5.  Procédé selon la revendication 4, **caractérisé en ce que** la fréquence de ladite onde porteuse acoustique est variée selon une technique de modulation de fréquence à deux signaux modulants et présente une forme du type défini par la relation suivante :

$$\text{CARRIER}(t) = \sin(2\pi \cdot f_0 \cdot t + \Delta 1/f1 \, \sin(2\pi \cdot f1 \cdot t) + \Delta 2/f2 \, \sin(2\pi \cdot f2 \cdot t)) \quad (3)$$

    où CARRIER(t) est l'expression de ladite onde porteuse acoustique en fonction du temps, f0 est la fréquence centrale de ladite onde porteuse acoustique, f1 et Δ1 sont respectivement la fréquence et la déviation maximale du premier signal modulant et f2 et Δ2 sont respectivement la fréquence et la déviation maximale du second signal modulant.

6.  Procédé selon la revendication 4 ou 5, **caractérisé en ce que** ladite onde porteuse acoustique est une onde acoustique présentant une fréquence centrale de l'ordre de 3'000 à 3'500 Hz modulée en fréquence par lesdits signaux modulants.

7.  Procédé selon la revendication 4, **caractérisé en ce que** les données à transmettre sont une succession de bits transmis par modulation en amplitude de ladite onde porteuse acoustique entre des premiers et seconds niveaux d'amplitude déterminés, et **en ce que** les paramètres de modulation en fréquence de ladite onde porteuse acoustique sont sélectionnés de sorte que le spectre de fréquence de l'onde porteuse acoustique résultant de ladite modulation en fréquence couvre sensiblement toute la bande-passante commune aux dispositifs d'émission et de réception.

8. Procédé selon l'une quelconque des revendications précédentes, **caractérisé en ce que** ladite onde porteuse acoustique est mémorisée dans ledit dispositif d'émission sous la forme d'une succession d'échantillons stockés dans une table.

9. Système de transmission de données par ondes acoustiques comprenant des moyens pour la mise en oeuvre de chaque étape du procédé de transmission selon l'une quelconque des revendications précédentes, **caractérisé en ce que** ce système comporte de plus :

   - un terminal informatique (2) associé audit dispositif d'émission acoustique (26) équipé dudit premier transducteur électroacoustique pour transmettre ladite onde porteuse acoustique; et
   - au moins un dispositif portable (1) muni dudit dispositif de réception acoustique (18) équipé dudit second transducteur électroacoustique pour recevoir ladite onde porteuse acoustique.

10. Système de transmission de données selon la revendication 9, où ladite onde porteuse acoustique est mémorisée dans ledit terminal informatique (2) sous la forme d'une succession d'échantillons stockés dans une table, **caractérisé en ce que** ledit terminal informatique comporte des moyens logiciels pour :

   - consulter ladite table ;
   - générer une onde porteuse acoustique sur la base de ladite succession d'échantillons ; et
   - moduler l'onde porteuse acoustique en fonction des données à transmettre.

**Claims**

1. Method of transmitting data by means of acoustic waves between a transmitter device (2) and a receiver device (1) comprising the steps of:

   transmitting an acoustic carrier wave at at least one frequency by a first electroacoustic transducer (26) of said transmitter device (2) and modulating said acoustic carrier wave as a function of data to be transmitted by means of said transmitter device (2),
   receiving said acoustic carrier wave modulated by the transmitter device with the help of a second electroacoustic transducer (18) of said receiver device (1) from said receiver device (1) and extracting the transmitted data therefrom with means of said receiver device (1),
   said first and second electroacoustic transducers (26, 18) each have a determined bandwidth and a determined frequency response characteristic,

   **characterised in that** the frequency of said acoustic carrier wave is varied during a determined time period to sweep a determined range of frequencies situated in the bandwidth common to said first and second electroacoustic transducers (26, 18) so that the frequency of the transmitted acoustic carrier wave does not coincide at any time with a peak or a trough of the frequency response characteristic of said first or said second electroacoustic transducer.

2. Method according to claim 1, **characterised in that** said modulation means of the transmitter device are amplitude modulation means and **in that** the frequency of said acoustic carrier wave is varied so that the envelope of this acoustic carrier wave remains substantially constant for a given modulation amplitude level.

3. Method according to claim 1 or claim 2, **characterised in that** the frequency of said acoustic carrier wave is varied in a substantially linear manner over said determined range of frequencies.

4. Method according to claim 1 or claim 2, **characterised in that** the frequency of said acoustic carrier wave is varied by means of a frequency modulation technique employing one or more modulating signals.

5. Method according to claim 4, **characterised in that** the frequency of said acoustic carrier wave is varied by means of a frequency modulation technique employing two modulating signals and has the shape of the type defined by

the following equation:

$$\text{CARRIER}(t) = \sin(2\pi \cdot f_0 \cdot t + \Delta 1/f1 \, \sin(2\pi \cdot f1 \cdot t) + \Delta 2/ f2 \, \sin(2\pi \cdot f2 \cdot t)) \quad (3)$$

In which CARRIER(t) is the expression for said acoustic carrier wave as a function of time, f0 is the centre frequency of said acoustic carrier wave, f1 and $\Delta 1$ are respectively the frequency and the maximum deviation of the first modulating signal and f2 and $\Delta 2$ are respectively the frequency and the maximum deviation of the second modulating signal.

6. Method according to claim 4 or claim 5, **characterised in that** said acoustic carrier wave is an acoustic wave that has a centre frequency of the order of 3000 Hz to 3500 Hz and is frequency modulated by said modulating signals.

7. Method according to claim 4, **characterised in that** the data to be transmitted comprises a succession of bits transmitted by amplitude modulation of said acoustic carrier wave between first and second determined amplitude levels and **in that** the parameters of frequency modulation of said acoustic carrier wave are selected so that the frequency spectrum of the acoustic carrier wave resulting from said frequency modulation covers substantially all of the band common to the transmitter and receiver devices.

8. Method according to any one of the preceding claims, **characterised in that** said acoustic carrier wave is stored in said transmitter device in the form of a succession of samples stored in a table.

9. System for transmitting data by means of acoustic waves comprising means for implementing for each step the transmission method according to any one of the preceding claims, **characterised in that** it further comprises:

   - a data processing terminal (2) associated with said acoustic transmitter device (26) having said first electroacoustic transducer for transmitting said acoustic carrier wave, and
   - at least one portable device (1) provided with said acoustic receiver device (18) having said second electroacoustic transducer for receiving said acoustic carrier wave.

10. System for transmitting data according to claim 9, wherein said acoustic carrier wave is stored in said data processing terminal (2) in the form of a succession of samples stored in a table and **characterised in that** said data processing terminal comprises software means for:

    - consulting said table,
    - generating an acoustic carrier wave based on said succession of samples, and
    - modulating the acoustic carrier wave as a function of the data to be transmitted.

**Patentansprüche**

1. Verfahren zum Übertragen von Daten durch Schallwellen zwischen einer Sendevorrichtung (2) und einer Empfangsvorrichtung (1), das die Schritte umfasst:

   senden eine Schallträgerwelle mit wenigstens einer Frequenz durch einen ersten elektroakustischen Wandler (26) der Sendevorrichtung (2) und modulieren die Schallträgerwelle in Abhängigkeit von zu übertragenden Daten durch Mittel der Sendevorrichtung (2),
   empfangen der durch die Sendevorrichtung modulierten Schallträgerwelle durch einen zweiten elektroakustischen Wandler (18) und der Empfangsvorrichtung (1) demodulieren die Schallträgerwelle und extrahieren die übertragenen Daten durch Mittel der Empfangsvorrichtung (1),

   wobei der erste und der zweite elektroakustische Wandler (26, 18) jeweils ein bestimmtes Durchlassband und eine bestimmte Frequenzgangcharakteristik aufweisen,
   **dadurch gekennzeichnet, dass** die Frequenz der Schallträgerwelle während einer bestimmten Zeitdauer verändert wird, um einen bestimmten Frequenzbereich zu überstreichen, der in dem gemeinsamen Durchlassband des ersten und des zweiten elektroakustischen Wandlers (26, 18) liegt, derart, dass die Frequenz der gesendeten Schallträgerwelle nicht ständig mit einer Spitze oder einem Tal der Frequenzgangcharakteristik des ersten oder des zweiten elektroakustischen Wandlers übereinstimmt.

2. Verfahren nach Anspruch 1, **dadurch gekennzeichnet, dass** die Modulationsmittel der Sendevorrichtung Amplitudenmodulationsmittel sind und dass die Frequenz der Schallträgerwelle in der Weise geändert wird, dass die Einhüllende dieser Schallträgerwelle für ein gegebenes Modulationsamplitudenniveau im Wesentlichen konstant bleibt.

3. Verfahren nach Anspruch 1 oder 2, **dadurch gekennzeichnet, dass** sich die Frequenz der Schallträgerwelle in dem bestimmten Frequenzbereich im Wesentlichen linear ändert.

4. Verfahren nach Anspruch 1 oder 2, **dadurch gekennzeichnet, dass** die Frequenz der Schallträgerwelle gemäß einer Frequenzmodulationstechnik mit einem oder mehreren modulierenden Signalen geändert wird.

5. Verfahren nach Anspruch 4, **dadurch gekennzeichnet, dass** die Frequenz der Schallträgerwelle gemäß einer Frequenzmodulationstechnik mit zwei modulierenden Signalen geändert wird und eine Form des Typs aufweist, der durch die folgende Beziehung definiert ist:

$$\text{CARRIER}(t) = \sin(2\pi \cdot f_0 \cdot t + \Delta 1/f1 \, \sin(2\pi \cdot f1 \cdot t) + \Delta 2/f2 \, \sin(2\pi \cdot f2 \cdot t)) \quad (3)$$

wobei CARRIER(t) der Ausdruck der Schallträgerwelle in Abhängigkeit von der Zeit ist, f0 die Mittenfrequenz der Schallträgerwelle ist, f1 und $\Delta$1 die Frequenz bzw. die maximale Abweichung des ersten modulierenden Signals sind und f2 und $\Delta$2 die Frequenz bzw. die maximale Abweichung des zweiten modulierenden Signals sind.

6. Verfahren nach Anspruch 4 oder 5, **dadurch gekennzeichnet, dass** die Schallträgerwelle eine Schallwelle ist, die eine Mittenfrequenz in der Größenordnung von 3000 bis 3500 Hz aufweist und durch die modulierenden Signale frequenzmoduliert ist.

7. Verfahren nach Anspruch 4, **dadurch gekennzeichnet, dass** die zu sendenden Daten eine Folge von Bits sind, die durch Amplitudenmodulation der Schallträgerwelle zwischen dem ersten und dem zweiten bestimmten Amplitudenniveau gesendet werden, und dass die Frequenzmodulationsparameter der Schallträgerwelle in der Weise ausgewählt werden, dass das Frequenzspektrum der Schallträgerwelle, das sich aus der Frequenzmodulation ergibt, im Wesentlichen das gesamte gemeinsame Durchlassband der Sende- und der Empfangsvorrichtung abdeckt.

8. Verfahren nach einem der vorhergehenden Ansprüche, **dadurch gekennzeichnet, dass** die Schallträgerwelle in der Sendevorrichtung in Form einer Folge von Abtastwerten, die in einer Tabelle abgelegt sind, gespeichert wird.

9. System zum Senden von Daten durch Schallwellen, das Mittel zum Ausführen jedes Schrittes des Sendeverfahrens nach einem der vorhergehenden Ansprüche umfasst, **dadurch gekennzeichnet, dass** das System darüber hinaus umfasst:

- ein Datenverarbeitungsendgerät (2), das der Schallsendevorrichtung (26) zugeordnet ist und mit dem ersten elektroakustischen Wandler ausgerüstet ist, um die Schallträgerwelle zu senden; und
- wenigstens eine tragbare Vorrichtung (1), die mit der Schallempfangsvorrichtung (18) versehen ist und mit dem zweiten elektroakustischen Wandler ausgerüstet ist, um die Schallträgerwelle zu empfangen.

10. System zum Senden von Daten nach Anspruch 9, bei dem die Schallträgerwelle in dem Datenverarbeitungsendgerät (2) in Form einer Folge von in einer Tabelle abgelegten Abtastwerten gespeichert ist, **dadurch gekennzeichnet, dass** das Datenverarbeitungsendgerät Software-Mittel umfasst, um:

- die Tabelle abzufragen;
- eine Schallträgerwelle auf der Grundlage der Folge von Abtastwerten zu erzeugen; und
- die Schallträgerwelle in Abhängigkeit von den zu sendenden Daten zu modulieren.

Fig. 1

## Fig. 2

temps [s]

Amplitude

0.0078

0

Fig. 3

temps [s]

Amplitude

0.0078

0

Fig. 4

Fig. 5

Séquence de bits

" 1 "     " 0 "     " 1 "     ...

Porteuse modulée

temps [s]

EP 1 543 638 B1

temps [ms]

Amplitude

Fig. 6